# EUROPEAN PATENT SPECIFICATION

(11) **EP 3 617 544 B1**
(45) Date of publication and mention of the grant of the patent: **17.11.2021**
(21) Application number: 18791475.9
(22) Date of filing: 24.04.2018
(51) Int. Cl.: F16D 65/092, B61H 5/00

(54) **FRICTION PAD ASSEMBLY FOR DISK BRAKE**
BREMSBELAGANORDNUNG FÜR EINE SCHEIBENBREMSE
ENSEMBLE PLAQUETTE POUR FREIN À DISQUE

(30) Priority: 24.04.2017 JP 2017085363; 24.07.2017 JP 2017142704
(43) Date of publication of application: 04.03.2020
(73) Proprietor: Akebono Brake Industry Co., Ltd., Tokyo 103-8534 (JP)
(72) Inventor: YAMAZAKI, Akihiko, Tokyo 103-8534 (JP); HARIGAI, Yoshikazu, Tokyo 103-8534 (JP); OKADA, Yuichi, Tokyo 103-8534 (JP); SHINDO, Takayuki, Tokyo 103-8534 (JP)
(74) Representative: Grünecker Patent- und Rechtsanwälte PartG mbB
(86) International application number: PCT/JP2018/016684
(87) International publication number: WO 2018/199119

(56) References cited:
- EP-A1- 1 318 321
- EP-A1- 2 085 637
- EP-A1- 2 835 557
- JP-A- 2014 211 196
- JP-A- 2014 211 196
- JP-A- 2016 109 248
- JP-A- 2016 109 248
- JP-A- 2017 057 882
- JP-A- 2017 057 882

## Description

### Technical Field

The present invention relates to a friction pad assembly for a disc brake.

### Background Art

A disc brake device for a railway vehicle or the like includes: a disc rotor fixed to an axle; a friction pad assembly for a disc brake in which a lining assembly is assembled to a surface of a disc rotor side of a torque receiving plate that faces the disc rotor; and a brake caliper that includes an actuator therein and is fixed to a vehicle body frame. The actuator drives the torque receiving plate to advance and retract relative to the disc rotor. The disc brake device generates a braking force by sliding friction when the torque receiving plate is advanced toward the disc rotor and the lining assembly is pressed against the disc rotor.

However, when the lining assembly is unintentionally rotated due to contact with the disc rotor, loss in transmission of a braking torque and brake noise are generated. Therefore, a rotation preventing mechanism (a rotation regulating structure) that regulates the rotation of the lining assembly is necessary for the disc brake device. A friction pad assembly for a disc brake disclosed in Patent Literature 1 includes a rotation preventing mechanism that regulates rotation of a lining assembly by fixing a rotation regulating plate between an inner surface of a guide plate that swingably supports the lining assembly and an inner surface of a back plate (a torque receiving plate) and engaging the rotation regulating plate with a retaining flange of the back plate.

### Citation List

### Patent Literature

Patent Literature 1: JP-A-2014-211196

Further prior art can be found in JP 2016-109248 A disclosing a friction pad assembly for a disc brake that is capable of reducing thickness and weight. A plurality of lining assemblies pressed to a disc rotor are supported by a guide plate receiving braking torque. The lining assemblies have back plate portions on rear faces of friction materials. Through holes are formed on a torque receiving plate fixed to the guide plate at intervals to the back plate portions. An anchor plate is fixed to a side opposite to the guide plate of the torque receiving plate. Separate link plates are fitted to the through holes. The link plates are disposed over the plurality of lining assemblies to make pressing force from the anchor plate act on each of the lining assemblies.

Additional prior art can be found in EP 1 318 321 A1.

### Summary of Invention

### Technical Problem

However, when the rotation regulating plate is fixed between the inner surface of the guide plate and the inner surface of the torque receiving plate as in the rotation preventing mechanism disclosed in Patent Literature 1, the number of components, the weight, and the manufacturing cost increase.

Additionally, since the lining assembly is swingably supported, when an abutting curved surface that abuts on the back plate protrudes from the back plate or a fitting plate, cutting processing is required and the processing cost increases, and the manufacturing cost increase due to an increase of the number of components.

The present invention is made in view of the above circumstances, and an object thereof is to provide a friction pad assembly for a disc brake in which a rotation regulating structure of a lining assembly or a structure that swingably supports the lining assembly can be implemented with a small number of components and at a low cost.

### Solution to Problem

The present invention suggests a friction pad assembly for a disc brake according to claim 1. The dependent claims relate to advantageous features and embodiments of the invention. The object of the present invention is achieved by the following configurations.

(1) A friction pad assembly for a disc brake in which at least one lining assembly is swingably supported on a guide plate receiving a braking torque and is pressed against a disc rotor, wherein
the lining assembly includes a friction material which is pressed against the disc rotor during braking and a back plate which is fixed to a back surface of the friction material, and the back plate includes a plate fitting part swingably fitted to a guide hole provided in the guide plate,
the plate fitting part is inserted and mounted to the guide hole so that a braking torque acting when the friction material is pressed against the disc rotor is transmitted from the plate fitting part to the guide plate, and
a convex swingably supporting the lining assembly is disposed on a torque receiving plate fixed to the guide plate.

According to the friction pad assembly for a disc brake having the configuration in (1), a rotation regulator that regulates rotation of the lining assembly is integrally formed on the torque receiving plate. The rotation regulator integrally formed on the torque receiving plate engages the lining assembly to regulate rotation of the lining assembly. The rotation regulator is directly disposed between the lining assembly and the torque receiving plate. Accordingly, a rotation regulating structure of the lining assembly can be simplified with a small number of components.

(2) The friction pad assembly for a disc brake according to (1) above, wherein a convex swingably supporting the lining assembly is disposed on the torque receiving plate.

According to the friction pad assembly for a disc brake having the configuration in (2), the convex, which is disposed on the torque receiving plate to swingably support the lining assembly, abuts against the back plate of the lining assembly, so that the lining assembly can be swung freely. According to this configuration, even when there are a plurality of lining assemblies, the convex can be collectively pressed onto the torque receiving plate at positions corresponding to the lining assemblies. Accordingly, the structure that swingably supports the lining assemblies can be manufactured at low cost with a simple structure.

(3) The friction pad assembly for a disc brake according to (1) above, wherein a convex swingably supporting the lining assembly is disposed on the back plate.

According to the friction pad assembly for a disc brake having the configuration in (3), the convex, which is disposed on the back plate to swingably support the lining assembly, abuts against the torque receiving plate, so that the lining assembly can be swung freely.

(4) The friction pad assembly for a disc brake according to (2) or (3) above, wherein a damping layer is provided between the back plate and the torque receiving plate.

According to the friction pad assembly for a disc brake having the configuration in (4), the vibration that transmits between the lining assembly and the torque receiving plate is dampted by the damping layer. The damping layer contributes to noise reduction due to contact between the torque receiving plate and the back plate. Accordingly, the vibration generated in one braking process is damped and squealing noise (so-called brake noise) is prevented.

(5) The friction pad assembly for a disc brake according to any one of (1) to (4) above, wherein the rotation regulator is a cut-and-raised piece formed on the torque receiving plate to engage with an engagement concave formed in the back plate.

According to the friction pad assembly for a disc brake having the configuration in (5), by forming the cut-and-raised piece on the torque receiving plate, the rotation regulator can be easily formed integrally with the torque receiving plate by a series of press working of punching and bending without other members.

(6) The friction pad assembly for a disc brake according to (5) above, wherein a member covering at least an opening formed in the torque receiving plate by the cut-and-raised piece is provided between the torque receiving plate and the back plate.

According to the friction pad assembly for a disc brake having the configuration in (6), the opening formed by cutting and raising the cut-and-raised piece is covered by the member provided between the torque receiving plate and the back plate. With this member, foreign matters can be prevented from entering the space between the torque receiving plate and the back plate through the opening from outside of the torque receiving plate.

(7) The friction pad assembly for a disc brake according to any one of (1) to (3) above, wherein the rotation regulator is an opening formed in the torque receiving plate to engage with a protrusion formed on the back plate.

According to the friction pad assembly for a disc brake having the configuration in (7), the protrusion is formed on the back plate and the opening that is engaged with the protrusion is formed in the torque receiving plate. That is, similarly to the case where the cut-and-raised piece is provided on the torque receiving plate, the lining assembly can be regulated from rotation with a simple structure using the back plate and the torque receiving plate only without other members. According to this configuration, processing on the torque receiving plate includes punching work for the opening only. Accordingly, the torque receiving plate is easily processed as compared with the case of forming the cut-and-raised piece.

(8) A friction pad assembly for a disc brake in which at least one lining assembly is swingably supported on a guide plate receiving a braking torque and is pressed against a disc rotor, wherein
the lining assembly includes a friction material which is pressed against the disc rotor during braking and a back plate which is fixed to a back surface of the friction material, and the back plate includes a plate fitting part swingably fitted to a guide hole provided in the guide plate,
the plate fitting part is inserted and mounted to the guide hole so that a braking torque acting when the friction material is pressed against the disc rotor is transmitted from the plate fitting part to the guide plate, and
a convex swingably supporting the lining assembly is disposed on a torque receiving plate fixed to the guide plate.

According to the friction pad assembly for a disc brake having the configuration in (8), the convex, which is disposed on the torque receiving plate to swingably support the lining assembly, abuts against the back plate of the lining assembly, so that the lining assembly can be swung freely. According to this configuration, even when there are a plurality of lining assemblies, the convex can be collectively pressed onto the torque receiving plate at positions corresponding to the lining assemblies. Accordingly, the structure that swingably supports the lining assemblies can be manufactured at low cost with a simple structure.

(9) The friction pad assembly for a disc brake according to any one of (5) to (78) above, wherein when the friction pad assembly for a disc brake is mounted to a brake pad attachment part of a caliper to which the friction pad assembly for a disc brake is attached, the opening formed in the torque receiving plate is covered by the brake pad attachment part.

According to the friction pad assembly for a disc brake having the configuration in (9), the torque receiving plate is mounted to the caliper such that the back surface (the surface opposite to a surface that the back plate faces) is covered by the brake pad attachment part. Therefore, for example, the opening that is left after the cut-and-raised piece is formed on the torque receiving plate or the opening formed to engage with the protrusion formed on the back plate is covered by the brake pad attachment part. Accordingly, foreign matters can be prevented from entering the space between the torque receiving plate and the back plate through the opening from outside of the torque receiving plate.

(10) The friction pad assembly for a disc brake according to (9), wherein an opening edge of the opening formed in the torque receiving plate is in close contact with the brake pad attachment part of the caliper to which the friction pad assembly for a disc brake is attached.

According to the friction pad assembly for a disc brake having the configuration in (10), the torque receiving plate is mounted to the caliper such that the opening edge of the opening formed in the back surface (the surface opposite to a surface that the back plate faces) is covered by the brake pad attachment part. Therefore, for example, the opening that is left after the cut-and-raised piece is formed on the torque receiving plate or the opening formed to engage with the protrusion formed on the back plate is blocked by the brake pad attachment part. Accordingly, foreign matters can be reliably prevented from entering the space between the torque receiving plate and the back plate through the opening from outside of the torque receiving plate.

### Advantageous Effects of Invention

According to the friction pad assembly for a disc brake in the present invention, it is possible to implement a rotation regulating structure of a lining assembly or a structure that swingably supports the lining assembly with a small number of components and at a low cost.

The present invention is briefly described above. Details of the present invention will be further clarified by reading modes for carrying out the present invention described below (hereinafter, referred to as "embodiments") with reference to the accompanying drawings.

### Brief Description of Drawings

Fig. 1 is a front view of a friction pad assembly for a disc brake according to a first embodiment of the present invention.
Fig. 2(a) is a right view of Fig. 1, Fig. 2(b) is a rear view of Fig. 1, and Fig. 2(c) is a cross-sectional view of Fig. 2(b) taken along a line B-B.
Fig. 3 is a cross-sectional view of Fig. 1 taken along a line A-A.
Fig. 4 is an exploded perspective view of the friction pad assembly for a disc brake in Fig. 1.
Fig. 5 is a cross-sectional view of the friction pad assembly for a disc brake in Fig. 1 when attached to a brake pad attachment part of a caliper.
Fig. 6 is a back view of a modification of the friction pad assembly for a disc brake in Fig. 1.
Fig. 7 is a cross-sectional view of the modification in Fig. 6.
Fig. 8 is an exploded perspective view of the modification in Fig. 6.
Fig. 9 is a cross-sectional view of a friction pad assembly for a disc brake according to a second embodiment of the present invention.
Fig. 10 is an exploded perspective view of the friction pad assembly for a disc brake in Fig. 9.
Fig. 11 is a cross-sectional view of a friction pad assembly for a disc brake according to a third embodiment of the present invention.
Fig. 12 is a cross-sectional view of a friction pad assembly for a disc brake according to a fourth embodiment of the present invention.
Fig. 13 is a cross-sectional view of a modification of the friction pad assembly for a disc brake in Fig. 12.
Fig. 14 is a cross-sectional view of a friction pad assembly for a disc brake according to a fifth embodiment of the present invention.

### Description of Embodiments

Hereinafter, embodiments according to the present invention will be described with reference to the drawings.

A friction pad assembly for a disc brake (hereinafter, simply referred to as a "friction pad assembly") according to the present embodiment, which is used in a disc brake device for a railway vehicle, is configured to face a disc rotor on an axle and is driven to advance and retract relative to the disc rotor by an actuator provided in a brake caliper fixed to a vehicle body frame. The friction pad assembly for a disc brake of the present invention is not limited to a disc brake device for a railway vehicle.

### [First Embodiment]

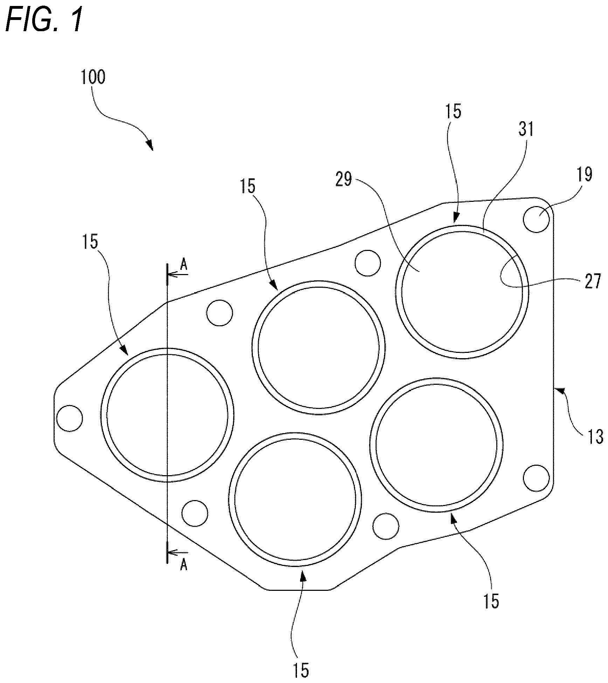

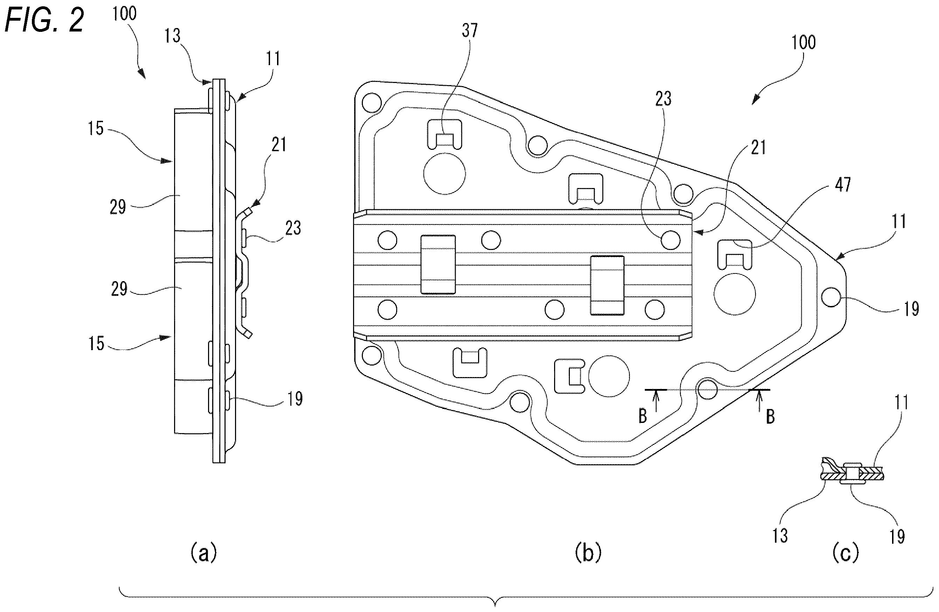

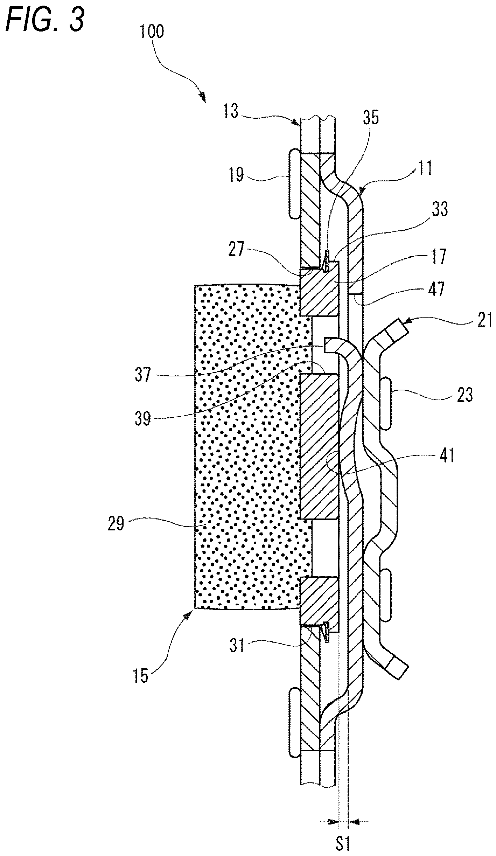

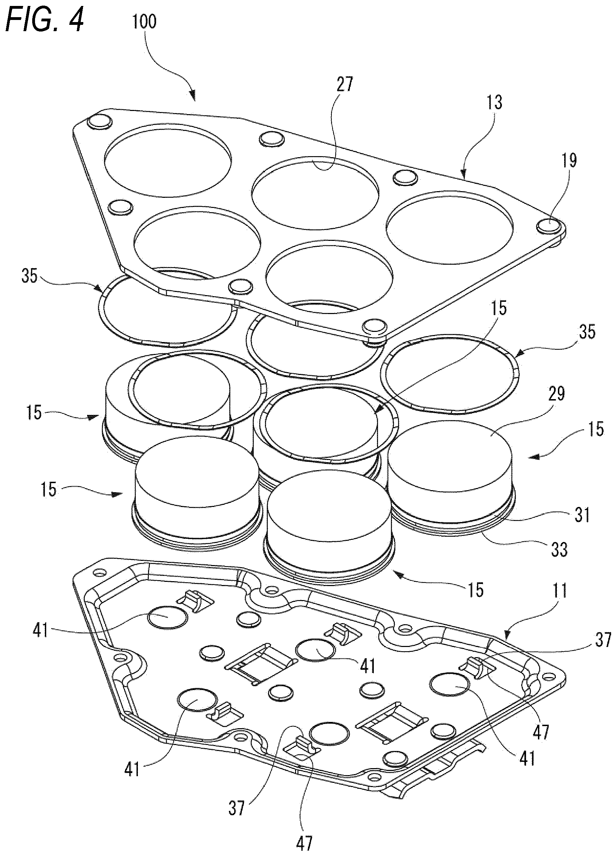

Fig. 1 is a front view of a friction pad assembly 100 according to the first embodiment of the present invention. Fig. 2(a) is a right view of Fig. 1, Fig. 2(b) is a rear view of Fig. 1, and Fig. 2(c) is a cross-sectional view of Fig. 2(b) taken along a line B-B. Fig. 3 is a cross-sectional view of Fig. 1 taken along a line A-A. Fig. 4 is an exploded perspective view of the friction pad assembly 100 in Fig. 1.

The friction pad assembly 100 according to the first embodiment includes a torque receiving plate 11 that is driven to advance and retract relative to a disc rotor by an actuator (not shown), a guide plate 13 connected and fixed to the disc rotor of the torque receiving plate 11, and at least one lining assembly 15 (five in the present embodiment) swingably fitted in and supported by the guide plate 13.

The torque receiving plate 11 is attached to the guide plate 13 in which the lining assembly 15 is inserted and mounted. The torque receiving plate 11 is fixed to the guide plate 13 by a rivet 19, leaving a gap S1 between the torque receiving plate 11 and a back plate 17 of the lining assembly 15. The torque receiving plate 11 has a thin dish shape to cover a back surface side of the back plate 17, so that the gap S1 is defined between the torque receiving plate 11 and the back plate 17.

As shown in Figs. 2 and 3, an anchor plate 21 is fixed to a back surface 11a of the torque receiving plate 11 by a rivet 23. The anchor plate 21 is coupled to a caliper press holder 25 coupled to an actuator (not shown). Accordingly, the friction pad assembly 100 can be driven to advance and retract relative to the disc rotor.

As shown in Fig. 1, the guide plate 13 is formed with a plurality of (five) guide holes 27 at predetermined intervals and the lining assembly 15 is mounted in each of the guide holes 27. The guide plate 13 is formed of a flat plate material having a predetermined thickness for receiving a braking torque that acts on the lining assembly 15 mounted in the guide holes 27 during braking.

The lining assembly 15 is swingably supported by the guide plate 13 that receives the braking torque and is pressed against the disc rotor. The lining assembly 15 includes a friction material 29 molded in a substantial disc shape and the back plate 17 fixed to a back surface of the friction material 29. The back plate 17 includes, in an integral manner, a plate fitting part 31 whose outer circumferential surface is swingably fitted in the circular guide holes 27 that penetrate the guide plate 13, and a retaining flange 33 having an outer diameter larger than an outer diameter of the guide holes 27.

An outer diameter of the friction material 29 is smaller than an inner diameter of the guide holes 27 so that the friction material 29 can be inserted through the guide holes 27. The friction material 29 is pressed against the disc rotor during braking. By fitting the plate fitting part 31 in the guide holes 27, the lining assembly 15 transmits the braking torque that acts when the friction material 29 is pressed against the disc rotor from the plate fitting part 31 to the guide plate 13.

The plate fitting part 31 has a curved shape that is convex toward the guide holes 27 so as to facilitate swinging of the lining assembly 15 by sliding contact with the guide holes 27. Accordingly, the plate fitting part 31 is swingably fitted in the guide holes 27 in the guide plate 13.

An annular spring member 35 is fitted to the plate fitting part 31. The spring member 35 is formed of an annular plate spring. An outer diameter of the spring member 35 is larger than an outer diameter of the guide holes 27. Each lining assembly 15 is inserted and mounted in the guide holes 27 from a back surface of the guide plate 13. Therefore, the spring member 35 fitted in the plate fitting part 31 is sandwiched between the guide plate 13 and the retaining flange 33.

The friction pad assembly 100 has a configuration in which a plurality of lining assemblies 15 are laid out in a plane. In the friction pad assembly 100, the spring member 35 sandwiched between the retaining flange 33 of the lining assembly 15 and the guide plate 13 is elastically deformed to absorb dimensional tolerance in the thickness direction of the lining assemblies 15. For this reason, in the friction pad assembly 100, variations in contact performance of the lining assemblies 15 with respect to the disc rotor can be avoided. Therefore, the lining assemblies 15 can ensure stable braking characteristics without being affected by the dimensional tolerance in the thickness direction.

The torque receiving plate 11 fixed to the guide plate 13 includes, in an integral manner, a rotation regulator that regulates rotation of the lining assemblies 15.

In the first embodiment, the rotation regulator includes a cut-and-raised piece 37. The cut-and-raised piece 37 is formed on the torque receiving plate 11 to be engaged with an engagement concave 39 formed in the back plate 17. The cut-and-raised piece 37 is formed by punching the torque receiving plate 11 with a U-shaped punch or the like to form a U-shaped slit and then bending (cutting and raising) a base end of the punched plate piece, which is surrounded by the U-shaped slit, toward the back plate 17 to be perpendicular to the torque receiving plate 11, as is shown in Fig. 4.

The cut-and-raised piece 37 regulates rotation of the lining assemblies 15 by being engaged with the engagement concave 39 formed in the back plate 17. In the first embodiment, the engagement concave 39 is a hole formed in the back plate 17. However, the engagement concave 39 is not limited to a hole.

For example, the engagement concave 39 may be a recess cut by a straight line connecting two points in the circumferential direction of the circular back plate 17. The recess serves as the engagement concave 39 that is recessed radially inward from an outer circumference of the back plate 17. The cut-and-raised piece 37 may also regulate the rotation of the lining assemblies 15 by abutting against the engagement concave 39 formed of the recess.

In the friction pad assembly 100 according to the first embodiment, the torque receiving plate 11 includes convexes 41 protruding toward the back plate 17. The convexes 41 may be formed, for example, by press working. The convexes 41 swingably support the lining assemblies 15. The lining assemblies 15, on which central parts of the circular back plate 17 are supported by the convexes 41, are swingably (pivotally movable) supported with the convexes 41 serving as centers.

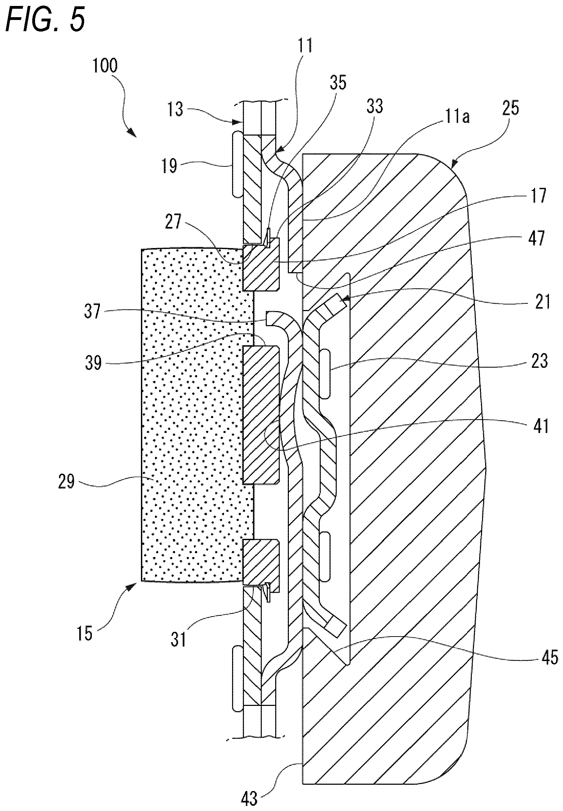

Fig. 5 is a cross-sectional view of the friction pad assembly 100 in Fig. 1 when attached to a brake pad attachment part 43 of the caliper press holder 25.

The friction pad assembly 100 is attached to the caliper press holder 25, as is shown in Fig. 5. The anchor plate 21 is fixed by the rivet 23 to the back surface 11a of the torque receiving plate 11 of the friction pad assembly 100. The friction pad assembly 100 is attached by inserting the anchor plate 21 into a dovetail fixing groove 45 formed on the brake pad attachment part 43 (an attachment surface of a disc rotor side of the pressing holder 25) of the caliper pressing holder 25.

In the friction pad assembly 100, the back surface 11a of the torque receiving plate 11 is in close contact with the brake pad attachment part 43 of the caliper pressing holder 25. The back surface 11a of the torque receiving plate 11 includes a plurality of openings 47 thereon. The openings 47 are square openings after the cut-and-raised piece 37 is cut and raised from the U-shaped slit punched for the cut-and-raised piece 37. The openings 47 have various shapes depending on a shape of the cut-and-raised piece 37. Opening edges of the openings 47 in the back surface 11a of the torque receiving plate 11 are in close contact with the brake pad attachment part 43, so that the openings 47 are blocked by the brake pad attachment part 43. Accordingly, foreign matters can be reliably prevented from entering the space between the torque receiving plate 11 and the guide plate 13 through the openings 47 from a back surface side of the torque receiving plate 11.

Next, assembly procedures of the friction pad assembly 100 according to the first embodiment will be described.

In order to assemble the friction pad assembly 100, first, the lining assemblies 15 are inserted and mounted into the guide holes 27 of the guide plate 13 whose back surface faces upward so that the friction material 29 protrudes toward a front surface side (a left side in Fig. 3) of the guide plate 13. At this time, the spring member 35 is fitted to the plate fitting part 31 of each lining assembly 15. The spring member 35 is sandwiched between the guide plate 13 and the retaining flange 33 by inserting the lining assemblies 15 into the guide holes 27. In the lining assemblies 15 inserted and mounted in the guide holes 27, the retaining flange 33 comes to abut against peripheries of the guide holes 27 via the spring member 35.

When all lining assemblies 15 are mounted in the guide holes 27, the torque receiving plate 11 is placed on the guide plate 13. At this time, the anchor plate 21 is fixed to the torque receiving plate 11 by the rivet 23. When the torque receiving plate 11 and the guide plate 13 are aligned, the convexes 41 protruding from the torque receiving plate 11 abut against the back plate 17 of the lining assemblies 15. At the same time, the cut-and-raised piece 37 of the torque receiving plate 11 is engaged with the engagement concave 39 of the back plate 17. Finally, outer circumferences of the guide plate 13 and the torque receiving plate 11 are sandwiched and fixed by the rivet 19 that penetrates the both, and assembly of the friction pad assembly for a disc brake is completed. In the friction pad assembly 100 in which the guide plate 13 and the torque receiving plate 11 are fixed by the rivet 19, the spring member 35 is deformed by a predetermined preload to be sandwiched between the guide plate 13 and the retaining flange 33.

Next, functions of the above configuration will be described.

In the friction pad assembly 100 according to the first embodiment, the cut-and-raised piece 37, which is a rotation regulator that regulates the rotation of the lining assemblies 15, is integrally formed with the torque receiving plate 11. The cut-and-raised piece 37 integrally formed with the torque receiving plate 11 engages with the engagement concave 39 of the lining assemblies 15 to regulate rotation of the lining assemblies 15. In this way, the cut-and-raised piece 37 serving as the rotation regulator is directly disposed between the lining assemblies 15 and the torque receiving plate 11. Accordingly, a rotation regulating structure of the lining assemblies 15 can be simplified with a small number of components.

In the friction pad assembly 100 according to the first embodiment, the convexes 41, which are disposed on the torque receiving plate 11 to swingably support the lining assemblies 15, abut against the back plate 17 of the lining assemblies 15, so that the lining assemblies 15 can be swung freely.

In the present embodiment, even when there are a plurality of lining assemblies 15, the convexes 41 can be collectively pressed onto the torque receiving plate 11 at positions corresponding to the lining assemblies 15. Accordingly, the structure that swingably supports the lining assemblies 15 can be manufactured at low cost with a simple structure.

In the friction pad assembly 100 according to the first embodiment, the cut-and-raised piece 37 is formed by punching the torque receiving plate 11 with a punch to form a U-shaped slit and bending the punched plate piece surrounded by the U-shaped slit at the base end connected to the torque receiving plate 11. Accordingly, the rotation regulator can be easily formed integrally with the torque receiving plate 11 by a series of press working of punching and bending without other members.

In the friction pad assembly 100 according to the first embodiment, the torque receiving plate 11 is mounted to the caliper pressing holder 25 such that the back surface (the surface opposite to a surface that the back plate 17 faces) 11a is in close contact with the brake pad attachment part 43. Therefore, the openings 47, which are left after the cut-and-raised piece 37 is formed on the torque receiving plate 11, are blocked by the brake pad attachment part 43. Accordingly, foreign matters can be prevented from entering the space between the torque receiving plate 11 and the back plate 17 through the openings 47 from outside of the torque receiving plate 11.

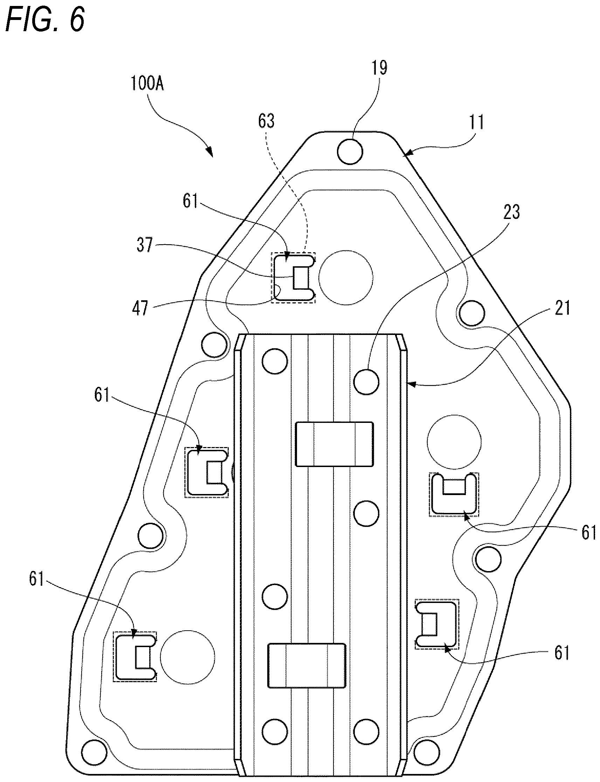

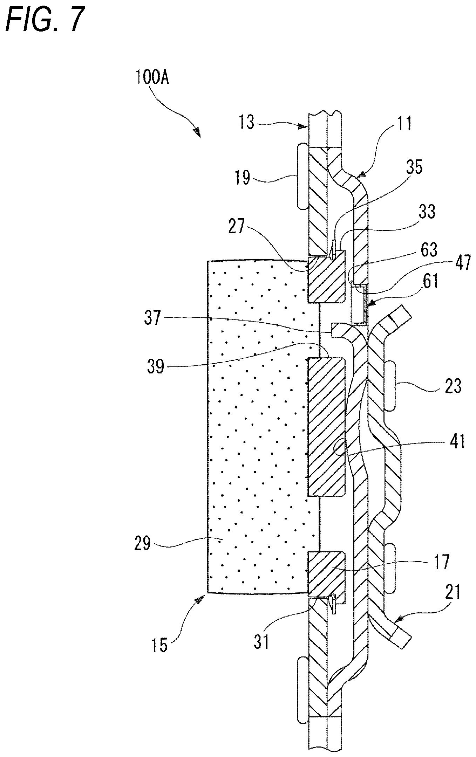

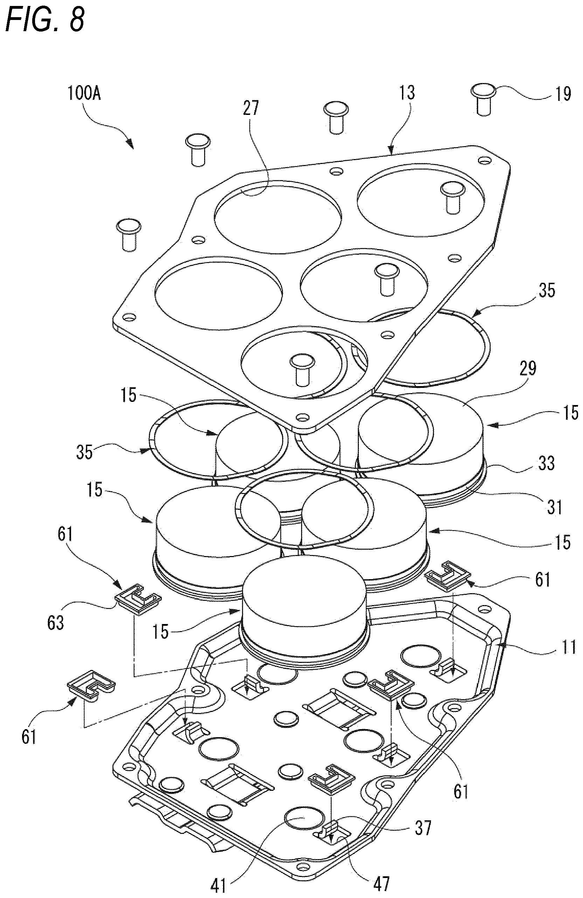

Fig. 6 is a back view of a friction pad assembly 100A according to a modification of the friction pad assembly 100 in Fig. 1. Fig. 7 is a cross-sectional view of the modification in Fig. 6. Fig. 8 is an exploded perspective view of the modification in Fig. 6.

In the friction pad assembly 100A according to this modification, as shown in Fig. 8, sealing plugs 61, which are each a member that covers at least the openings 47, are fitted in the openings 47 formed in the torque receiving plate 11 by the cut-and-raised piece 37.

The sealing plugs 61 are formed of, for example, a synthetic resin material or metal. Flanges 63 are formed on outer circumferences of the sealing plugs 61. The sealing plugs 61 are inserted into the openings 47 from the inside (an upper side in Fig. 8) of the torque receiving plate 11 and are fitted into the openings 47 as stoppers. The sealing plugs 61 may each include an engagement claw (not shown) to be engaged with the opening edges of the openings 47.

According to the friction pad assembly 100A, foreign matters can be prevented from entering the space between the torque receiving plate 11 and the back plate 17 through the openings 47 from outside of the torque receiving plate 11.

### [Second Embodiment]

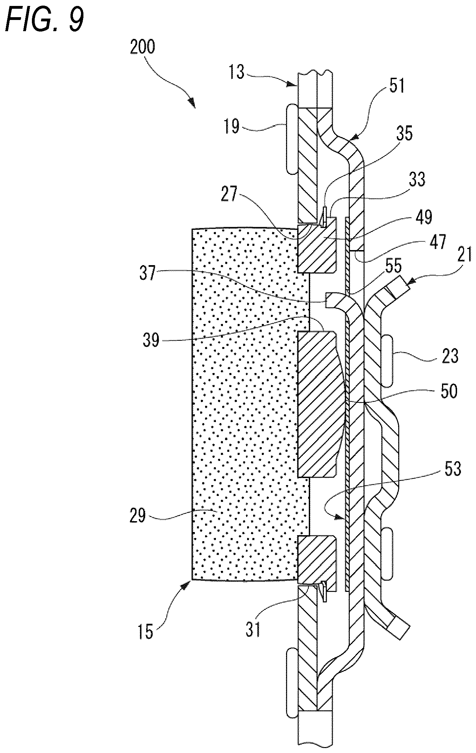

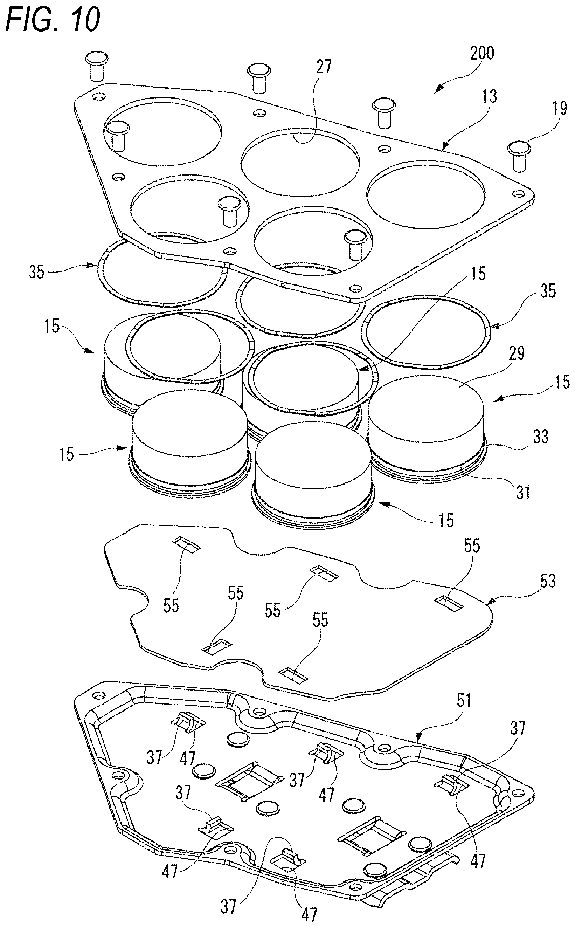

Fig. 9 is a cross-sectional view of a friction pad assembly 200 according to the second embodiment of the present invention. Fig. 10 is an exploded perspective view of the friction pad assembly 200 in Fig. 9. In the second embodiment, the same members as those in Figs. 1 to 5 are denoted by the same reference numerals, and repetitive descriptions thereof will be omitted.

In the friction pad assembly 200 according to the second embodiment, convexes 50 that swingably support the lining assemblies 15 are disposed on a back plate 49. Therefore, as shown in Fig. 10, a torque receiving plate 51 of the friction pad assembly 200 does not include the convexes 41 in the torque receiving plate 11 in Fig. 4.

The friction pad assembly 200 according to the second embodiment includes a damping layer 53 between the back plate 49 and the torque receiving plate 51. The damping layer 53 has a uniform thickness. As shown in Fig. 10, the damping layer 53 has a substantially similar shape to the torque receiving plate 51 by being along a circumferential wall on an inner surface of the torque receiving plate 51. The damping layer 53 includes a plurality of avoiding holes 55 to avoid interference with the cut-and-raised piece 37. Accordingly, a surface of the damping layer 53 is the same flat surface as the inner surface of the torque receiving plate 51. The damping layer 53 is attached to the inner surface of the torque receiving plate 51 by, for example, an adhesive layer (not shown).

As the damping layer 53, for example, a laminated shim in which a metal supporting plate and an elastic material are stuck and laminated may be used. The damping layer 53 has a laminated structure with an appropriate elastic modulus in its in-plane and perpendicular directions. In the laminated structure, for example, a rubber that is an elastic material, a stainless steel plate that is a metal supporting plate, an adhesive material that is an elastic material, a cold-rolled steel sheet that is a metal supporting plate, and a rubber that is an elastic material may be laminated in this order. The damping layer 53 is not limited to the laminated structure according to the present embodiment, and various laminated structures or single-layer structures may be adopted as long as noise can be reduced by damping the vibration that transmits between the lining assemblies 15 and the torque receiving plate 51.

By being provided between the torque receiving plate 51 and the back plate 49 in the friction pad assembly 200, the damping layer 53 functions as a member that covers at least the openings 47 formed in the torque receiving plate 51 by the cut-and-raised piece 37.

According to the friction pad assembly 200 in the second embodiment, the convexes 50, which are disposed on the back plate 49 to swingably support the lining assemblies 15, are supported by the torque receiving plate 51 via the damping layer 53, so that the lining assemblies 15 can be swung freely.

In the friction pad assembly 200 according to the second embodiment, the vibration that transmits between the lining assemblies 15 and the torque receiving plate 51 is damped by the damping layer 53. The damping layer 53 contributes to noise reduction due to contact between the torque receiving plate 51 and the back plate 49. Accordingly, the vibration generated in one braking process is damped and squealing noise (so-called brake noise) is prevented.

Further, in the friction pad assembly 200 according to the second embodiment, the openings 47, which are left after the cut-and-raised piece 37 is cut and raised, are provided between the torque receiving plate 51 and the back plate 49, and are covered by the damping layer 53 serving as a member that covers the openings 47. With the damping layer 53, foreign matters can be prevented from entering the space between the torque receiving plate 51 and the back plate 49 through the openings 47 from outside of the torque receiving plate 51.

### [Third Embodiment]

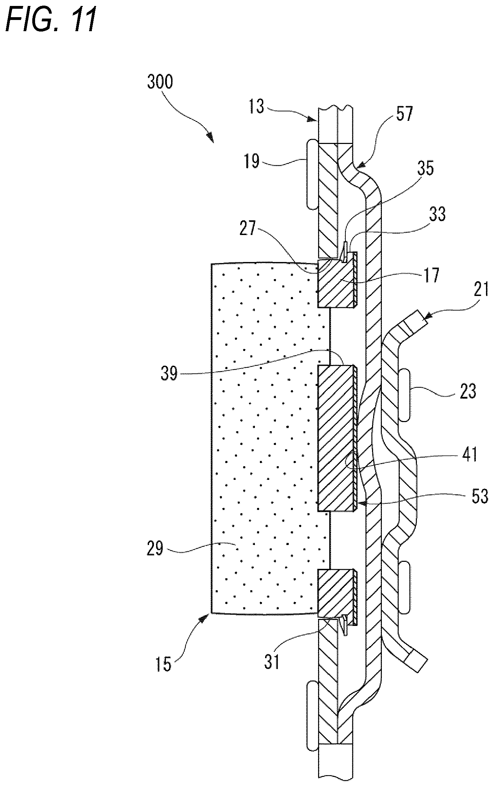

Fig. 11 is a cross-sectional view of a friction pad assembly 300 according to the third embodiment of the present invention. In the third embodiment, the same members as those in Figs. 1 to 10 are denoted by the same reference numerals, and repetitive descriptions thereof will be omitted.

In the friction pad assembly 300 according to the third embodiment, at least one lining assembly 15 is swingably supported by the guide plate 13 that receives a braking torque, and the lining assembly 15 is pressed against a disc rotor. The lining assembly 15 includes the friction material 29 pressed against the disc rotor during braking and the back plate 17 fixed to a back surface of the friction material 29. The back plate 17 includes the plate fitting part 31 that is swingably fitted in the guide hole 27 in the guide plate 13. The plate fitting part 31 is inserted and mounted in the guide hole 27, and the braking torque that acts when the friction material 29 is pressed against the disc rotor is transmitted from the plate fitting part 31 to the guide plate 13. The convex 41 that swingably supports the lining assembly 15 is disposed on a torque receiving plate 57 fixed to the guide plate 13.

The friction pad assembly 300 according to the third embodiment is different from the above-described friction pad assemblies 100 and 200 in that a rotation regulator is not a necessary component of the torque receiving plate 57. The friction pad assembly 300 also differs from the friction pad assembly 200 in that the damping layer 53 is attached to the back plate 17. The friction pad assembly 300 may certainly include a rotation regulator. Other configurations are substantially the same as those of the friction pad assembly 100.

Therefore, in the friction pad assembly 300 according to the third embodiment, the convex 41, which is disposed on the torque receiving plate 57 to swingably support the lining assembly 15, supports the back plate 17 of the lining assembly 15 via the damping layer 53, so that the lining assembly 15 can be swung freely. The convex 41 is collectively pressed to positions corresponding to each lining assembly 15 in the torque receiving plate 57. Accordingly, a structure that swingably supports the lining assembly 15 can be manufactured at low cost with a simple structure.

Further, the vibration that transmits between the lining assembly 15 and the torque receiving plate 57 is damped by the damping layer 53. The damping layer 53 contributes to noise reduction due to contact between the torque receiving plate 57 and the back plate 17. Accordingly, the vibration generated in one braking process is damped and squealing noise (so-called brake noise) is prevented.

### [Fourth Embodiment]

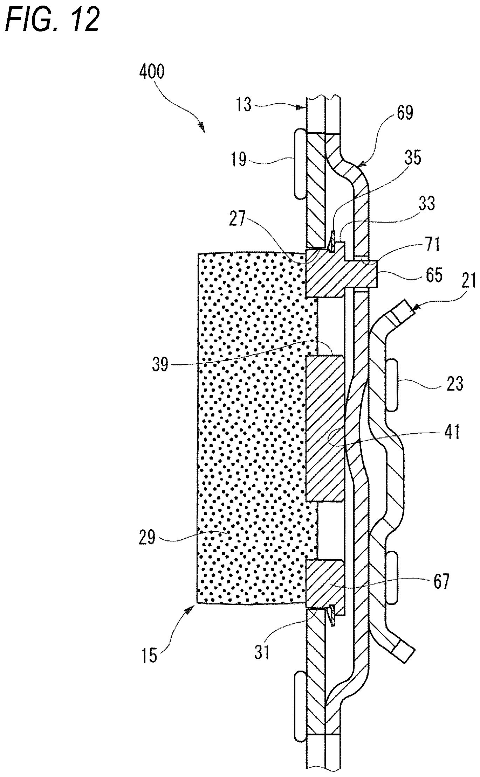

Fig. 12 is a cross-sectional view of a friction pad assembly 40 according to the fourth embodiment of the present invention. In the fourth embodiment, the same members as those in Figs. 1 to 3 are denoted by the same reference numerals, and repetitive descriptions thereof will be omitted.

In the friction pad assembly 400 according to the fourth embodiment, a rotation regulator is formed by an engagement hole 71 in a torque receiving plate 69. The engagement hole 71 engages with a protrusion 65 formed in a back plate 67. The protrusion 65 protrudes toward the torque receiving plate 69 from the back plate 67 of the lining assembly 15. The protrusion 65 may be formed integrally with the back plate 67 or be fixed to the back plate 67 as a separate object.

In the friction pad assembly 400 according to the fourth embodiment, the convex 41 protrudes from the torque receiving plate 69.

The friction pad assembly 400 according to the fourth embodiment can regulate rotation of the lining assembly 15 by engaging the protrusion 65 of the lining assembly 15 with the engagement hole 71 of the torque receiving plate 69. Therefore, it is not necessary to provide the cut-and-raised piece 37 on the torque receiving plate 69. The back plate 67 may omit the engagement concave 39 in the drawing with which the cut-and-raised piece 37 is engaged.

According to the friction pad assembly 400 in the fourth embodiment, the protrusion 65 is formed in the back plate 67 and the engagement hole 71 that is engaged with the protrusion 65 is formed in the torque receiving plate 69. That is, similarly to the case where the cut-and-raised piece 37 is provided on the torque receiving plate 11, the lining assembly 15 can be regulated from rotation with a simple structure using the back plate 67 and the torque receiving plate 69 only without other members. In the fourth embodiment, processing on the torque receiving plate 69 includes punching work for the engagement hole 71 and protruding processing for raising the convex 41 only. Accordingly, the torque receiving plate 69 is easily processed as compared with the case of forming the cut-and-raised piece 37.

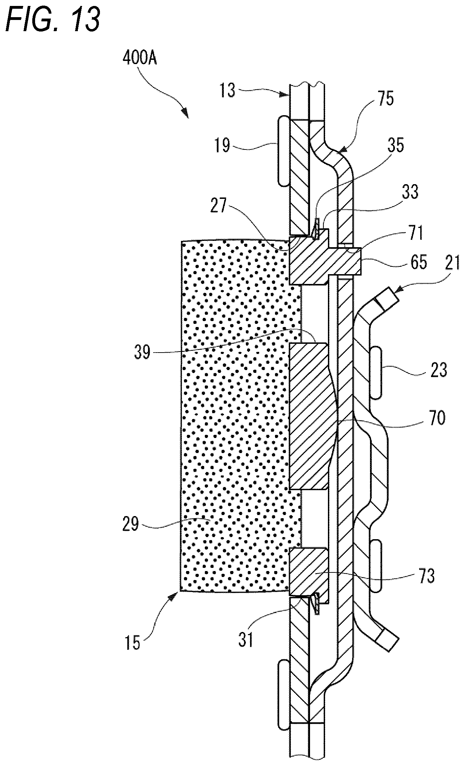

Fig. 13 is a cross-sectional view of a friction pad assembly 400A according to a modification of the friction pad assembly 400 in Fig. 12.

The friction pad assembly 400A according to the modification includes a convex 70 that swingably supports the lining assembly 15 on a back plate 73. Therefore, a torque receiving plate 75 includes only the engagement hole 71 into which the protrusion 65 is engaged, without the convex 41.

According to the friction pad assembly 400A, processing on the torque receiving plate 75 includes the punching work for the engagement hole 71 only. Accordingly, the torque receiving plate 75 can be processed more easily as compared with the case of forming the cut-and-raised piece 37 and the convex 41.

### [Fifth embodiment]

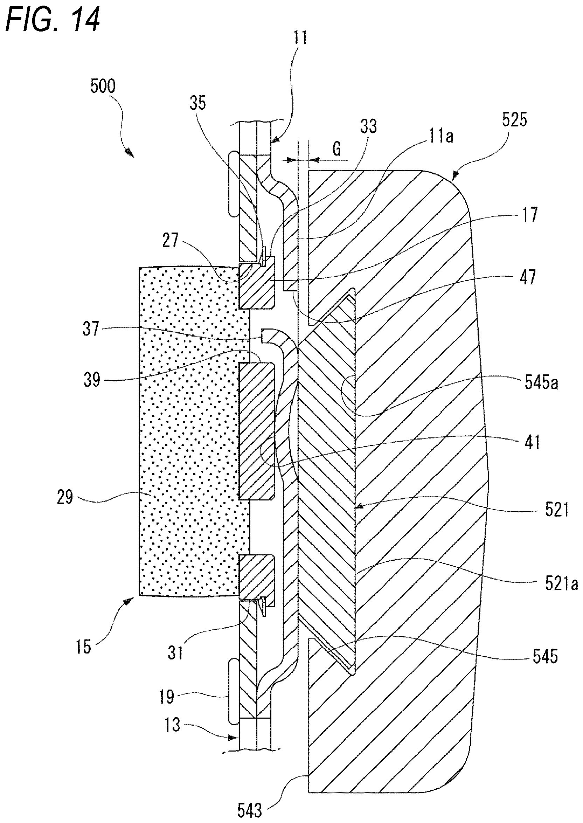

Fig. 14 is a cross-sectional view of a friction pad assembly 500 according to the fifth embodiment of the present invention. In the fifth embodiment, the same members as those in Figs. 1 to 3 are denoted by the same reference numerals, and repetitive descriptions thereof will be omitted.

The friction pad assembly 500 according to the fifth embodiment includes, as shown in Fig. 5, an anchor plate 521 fixed to the back surface 11a of the torque receiving plate 11 by a rivet.

The friction pad assembly 500 is attached by inserting the anchor plate 521 into a dovetail fixing groove 545 formed on a brake pad attachment part 543 (an attachment surface of a disc rotor side of a caliper pressing holder 525) of the caliper pressing holder 525.

The friction pad assembly 500 is pressed against a disc rotor by abutting a back surface 521a of the anchor plate 521 against a bottom surface 545a of the fixing groove 545 of the caliper pressing holder 525. At this time, the back surface 11a of the torque receiving plate 11 and the brake pad attachment part 543 define a gap (G) in between.

Therefore, in the torque receiving plate 11, a plurality of openings 47 in the back surface 11a are covered by the brake pad attachment part 543 in a state where the rear surface 11a has the slight gap (G) between the rear surface 11a and the brake pad attachment part 543.

Therefore, by covering the openings 47 with the brake pad attachment part 543, the friction pad assembly 500 according to the fifth embodiment can prevent foreign matter from entering the space between the torque receiving plate 11 and the guide plate 13 through the openings 47 from a back surface side of the torque receiving plate 11.

Therefore, according to the friction pad assemblies 100, 100A, 200, 400, 400A, and 500 according to the above embodiments, a rotation regulating structure of the lining assembly 15 can be implemented at low cost with a small number of components.

Further, according to the friction pad assemblies 100, 100A, 300, 400, and 500 according to the above embodiments, a structure that swingably supports the lining assembly 15 can be implemented at low cost with a small number of components.

The friction pad assembly for a disc brake of the present invention is not limited to the above embodiments, and appropriate modifications and improvements can be made based on the appended claims.

For example, when one friction pad assembly for a disc brake includes a plurality of unit friction pad assemblies, the number of the unit friction pad assemblies to be provided may be one or three or more.

This application is based on Japanese Patent Application (JP-A-2017-85363) filed on April 24, 2017 and Japanese Patent Application (JP-A-2017-142704) filed on July 24, 2017.

### Industrial Applicability

According to the friction pad assembly for a disc brake in the present invention, it is possible to implement a rotation regulating structure for a lining assembly or a structure that swingably supports the lining assembly with a small number of components and at a low cost.

### Reference Signs List

- 11: torque receiving plate
- 13: guide plate
- 15: lining assembly
- 17: back plate
- 27: guide hole
- 29: friction material
- 31: plate fitting part
- 37: cut-and-raised piece (rotation regulator)
- 39: engagement concave
- 100: friction pad assembly (friction pad assembly for disc brake)

## Claims

1. A friction pad assembly for a disc brake (100, 100A, 200, 400, 400A, 500) in which at least one lining assembly (15) is swingably supported on a guide plate (13) receiving a braking torque and the lining assembly (15) is pressed against a disc rotor, wherein
the lining assembly (15) includes a friction material (29) which is pressed against the disc rotor during braking and a back plate (17, 67, 73) which is fixed to a back surface of the friction material (29), and the back plate (17, 67, 73) includes a plate fitting part (31) swingably fitted to a guide hole (27) provided in the guide plate (13),
the plate fitting part (31) is fitted into the guide hole (27) such that a braking torque acting when the friction material (29) is pressed against the disc rotor is transmitted from the plate fitting part (31) to the guide plate (13), **characterized in that**
a rotation regulator (37, 71) regulating a rotation of the lining assembly (15) is integrally formed on a torque receiving plate (11, 51, 69, 75) fixed to the guide plate (13).

2. The friction pad assembly for a disc brake (100, 100A, 400, 500) according to claim 1, wherein
a convex (41) swingably supporting the lining assembly (15) is disposed on the torque receiving plate (11, 69).

3. The friction pad assembly for a disc brake (200, 400A) according to claim 1, wherein
a convex (50, 70) swingably supporting the lining assembly (15) is disposed on the back plate (49, 73).

4. The friction pad assembly for a disc brake (200) according to claim 2 or 3, wherein
a damping layer (53) is provided between the back plate (49) and the torque receiving plate (51).

5. The friction pad assembly for a disc brake (100, 100A, 200, 500) according to any one of claims 1 to 4, wherein
the rotation regulator is a cut-and-raised piece (37) formed on the torque receiving plate (11, 51) to engage with an engagement concave (39) formed in the back plate (17, 49).

6. The friction pad assembly for a disc brake (100A) according to claim 5, wherein
a member (61) covering at least an opening (47) formed in the torque receiving plate (11) by the cut-and-raised piece (37) is provided between the torque receiving plate (11) and the back plate (17).

7. The friction pad assembly for a disc brake (400, 400A) according to any one of claims 1 to 3, wherein
the rotation regulator is an opening (71) formed in the torque receiving plate (69, 75) to engage with a protrusion (65) formed on the back plate (67, 73).

8. The friction pad assembly for a disc brake (500) according to any one of claims 5 to 7, wherein
when the friction pad assembly for a disc brake is mounted to a brake pad attachment part (543) of a caliper to which the friction pad assembly for a disc brake is attached, the opening (47, 71) formed in the torque receiving plate (11) is covered by the brake pad attachment part (543).

9. The friction pad assembly for a disc brake (100) according to claim 8, wherein
an opening edge of the opening (47, 71) formed in the torque receiving plate (11) is in close contact with the brake pad attachment part (543) of the caliper to which the friction pad assembly for a disc brake is attached.

## Patentansprüche

1. Bremsbelag-Baugruppe (100, 100A, 200, 400, 400A, 500) für eine Scheibenbremse, bei der wenigstens eine Belag-Baugruppe (15) schwenkbar an einer Führungsplatte (13) gelagert ist, die ein Bremsmoment aufnimmt, und die Belag-Baugruppe (15) an einen Scheiben-Rotor gedrückt wird, wobei
die Belag-Baugruppe (15) ein Reibmaterial (29), das beim Bremsen an den Scheiben-Rotor gedrückt wird, sowie eine Trägerplatte (17, 67, 73) umfasst, die an einer Rückseite des Reibmaterials (29) befestigt ist, und die Trägerplatte (17, 67, 73) ein Platten-Passteil (31) umfasst, das schwenkbar in ein Führungsloch (27) eingepasst ist, das in der Führungsplatte (13) vorhanden ist,
das Platten-Passteil (31) so in das Führungsloch (27) eingepasst ist, dass ein Bremsmoment, das wirkt, wenn das Reibmaterial (29) an den Scheiben-Rotor gedrückt wird, von dem Platten-Passteil (31) auf die Führungsplatte (13) übertragen wird, **dadurch gekennzeichnet, dass**
eine Drehungs-Reguliereinrichtung (37, 71), die eine Drehung der Belag-Baugruppe (15) reguliert, integral an einer Drehmoment-Aufnahmeplatte (11, 51, 69, 75) ausgebildet ist, die an der Führungsplatte (13) befestigt ist.

2. Bremsbelag-Baugruppe (100, 100A, 400, 500) für eine Scheibenbremse nach Anspruch 1, wobei
an der Drehmoment-Aufnahmeplatte (11, 69) eine Wölbung (41) angeordnet ist, die die Belag-Baugruppe (15) schwenkbar lagert.

3. Bremsbelag-Baugruppe (200, 400A) für eine Scheibenbremse nach Anspruch 1, wobei
an der Trägerplatte (49, 73) eine Wölbung (50, 70) angeordnet ist, die die Belag-Baugruppe (15) schwenkbar lagert.

4. Bremsbelag-Baugruppe (200) für eine Scheibenbremse nach Anspruch 2 oder 3, wobei
eine dämpfende Schicht (53) zwischen der Trägerplatte (49) und der Drehmoment-Aufnahmeplatte (51) vorhanden ist.

5. Bremsbelag-Baugruppe (100, 100A, 200, 500) für eine Scheibenbremse nach einem der Ansprüche 1 bis 4, wobei
die Drehungs-Reguliereinrichtung ein ausgeschnittenes und aufgestelltes Teil (37) ist, das an der Drehmoment-Aufnahmeplatte (11, 51) ausgebildet ist und mit einer in der Trägerplatte (17, 49) ausgebildeten Eingriffs-Aushöhlung (39) in Eingriff kommt.

6. Bremsbelag-Baugruppe (100A) für eine Scheibenbremse nach Anspruch 5, wobei
ein Element (61), das wenigstens eine Öffnung (47) abdeckt, die in der Drehmoment-Aufnahmeplatte (11) durch das ausgeschnittene und aufgestellte Teil (37) gebildet wird, zwischen der Drehmoment-Aufnahmeplatte (11) und der Trägerplatte (17) vorhanden ist.

7. Bremsbelag-Baugruppe (400, 400A) für eine Scheibenbremse nach einem der Ansprüche 1 bis 3, wobei
die Drehungs-Reguliereinrichtung eine Öffnung (71) ist, die in der Drehmoment-Aufnahmeplatte (69, 75) ausgebildet ist und mit einem an der Trägerplatte (67, 73) ausgebildeten Vorsprung (65) in Eingriff kommt.

8. Bremsbelag-Baugruppe (500) für eine Scheibenbremse nach einem der Ansprüche 5 bis 7, wobei
wenn die Bremsbelag-Baugruppe für eine Scheibenbremse an einem Belag-Anbringungsteil (543) eines Bremssattels montiert ist, an dem die Bremsbelag-Baugruppe für eine Scheibenbremse angebracht ist, die in der Drehmoment-Aufnahmeplatte (11) ausgebildete Öffnung (47, 71) durch den Belag-Anbringungsteil (543) abgedeckt wird.

9. Bremsbelag-Baugruppe (100) für eine Scheibenbremse nach Anspruch 8, wobei
eine Öffnungskante der in der Drehmoment-Aufnahmeplatte (11) ausgebildeten Öffnung (47, 71) in engem Kontakt mit dem Belag-Anbringungsteil (543) des Bremssattels ist, an dem die Bremsbelag-Baugruppe für eine Scheibenbremse angebracht ist.

## Revendications

1. Ensemble de plaquette de friction pour un frein à disque (100, 100A, 200, 400, 400A, 500) dans lequel au moins un ensemble de revêtement (15) est supporté de manière pivotante sur une plaque de guidage (13) recevant un couple de freinage et l'ensemble de revêtement (15) est pressé contre un rotor de disque, dans lequel
l'ensemble de revêtement (15) comprend un matériau de friction (29) qui est pressé contre le rotor de disque pendant un freinage et une plaque arrière (17, 67, 73) qui est fixée à une surface arrière du matériau de friction (29), et la plaque arrière (17, 67, 73) comprend une partie de montage de plaque (31) montée de manière pivotante sur un trou de guidage (27) agencé dans la plaque de guidage (13),
la partie de montage de plaque (31) est montée dans le trou de guidage (27) de telle sorte qu'un couple de freinage agissant lorsque le matériau de friction (29) est pressé contre le rotor de disque est transmis de la partie de montage de plaque (31) à la plaque de guidage (13), **caractérisé en ce que**
un régulateur de rotation (37, 71) régulant une rotation de l'ensemble de revêtement (15) est formé d'un seul tenant sur une plaque de réception de couple (11, 51, 69, 75) fixée à la plaque de guidage (13).

2. Ensemble de plaquette de friction pour un frein à disque (100, 100A, 400, 500) selon la revendication 1, dans lequel
une pièce convexe (41) supportant de manière pivotante l'ensemble de revêtement (15) est disposée sur la plaque de réception de couple (11, 69).

3. Ensemble de plaquette de friction pour un frein à disque (200, 400A) selon la revendication 1, dans lequel
une pièce convexe (50, 70) supportant de manière pivotante l'ensemble de revêtement (15) est disposée sur la plaque arrière (49, 73).

4. Ensemble de plaquette de friction pour un frein à disque (200) selon la revendication 2 ou 3, dans lequel
une couche d'amortissement (53) est agencée entre la plaque arrière (49) et la plaque de réception de couple (51).

5. Ensemble de plaquette de friction pour un frein à disque (100, 100A, 200, 500) selon l'une quelconque des revendications 1 à 4, dans lequel
le régulateur de rotation est une pièce découpée et surélevée (37) formée sur la plaque de réception de couple (11, 51) pour venir en prise avec une pièce concave de mise en prise (39) formée dans la plaque arrière (17, 49).

6. Ensemble de plaquette de friction pour un frein à disque (100A) selon la revendication 5, dans lequel
un élément (61) recouvrant au moins une ouverture (47) formée dans la plaque de réception de couple (11) par la pièce découpée et surélevée (37) est agencé entre la plaque de réception de couple (11) et la plaque arrière (17).

7. Ensemble de plaquette de friction pour un frein à disque (400, 400A) selon l'une quelconque des revendications 1 à 3, dans lequel
le régulateur de rotation est une ouverture (71) formée dans la plaque de réception de couple (69, 75) pour venir en prise avec une saillie (65) formée sur la plaque arrière (67, 73).

8. Ensemble de plaquette de friction pour un frein à disque (500) selon l'une quelconque des revendications 5 à 7, dans lequel
lorsque l'ensemble de plaquette de friction pour un frein à disque est monté sur une partie de fixation de plaquette de frein (543) d'un étrier auquel est fixé l'ensemble de plaquette de friction pour un frein à disque, l'ouverture (47, 71) formée dans la plaque de réception de couple (11) est recouverte par la pièce de fixation de plaquette de frein (543).

9. Ensemble de plaquette de friction pour un frein à disque (100) selon la revendication 8, dans lequel
un bord d'ouverture de l'ouverture (47, 71) formée dans la plaque de réception de couple (11) est en contact étroit avec la partie de fixation de plaquette de frein (543) de l'étrier auquel est fixé l'ensemble de plaquette de friction pour un frein à disque.
